# EUROPÄISCHE PATENTSCHRIFT

(11) **EP 3 869 622 B1**
(45) Veröffentlichungstag und Bekanntmachung des Hinweises auf die Patenterteilung: **13.12.2023**
(21) Anmeldenummer: 21000029.5
(22) Anmeldetag: 29.01.2021
(51) Int. Cl.: H01R 4/70, B60L 53/16, H01R 13/66, H01R 13/6589, H01R 13/52, H01R 13/502

(54) **LADEBUCHSE FÜR EIN ELEKTROFAHRZEUG**
CHARGING SOCKET FOR AN ELECTRIC VEHICLE
PRISE DE RECHARGE POUR UN VÉHICULE ÉLECTRIQUE

(30) Priorität: 20.02.2020 DE 102020104511
(43) Veröffentlichungstag der Anmeldung: 25.08.2021
(73) Patentinhaber: HARTING Automotive GmbH, 32339 Espelkamp (DE)
(72) Erfinder: Helfenbein, Irene, 32339 Espelkamp (DE); Bösch, Daniel, 32339 Espelkamp (DE); Beimdieck, Carsten, 32339 Espelkamp (DE)

(56) Entgegenhaltungen:
- KR-B1- 100 774 654
- US-A1- 2016 006 156

## Beschreibung

Die Erfindung geht aus von einer Ladebuchse für ein Elektrofahrzeug nach der Gattung des unabhängigen Anspruchs 1.

Derartige Ladebuchsen werden in Elektrofahrzeugen eingesetzt. In die Ladebuchsen werden Ladesteckverbinder zum Laden der im Elektrofahrzeug befindlichen Batterien eingesteckt.

### Stand der Technik

Die WO 2017/162651 A1 zeigt eine Ladebuchse für ein Elektrofahrzeug. Die Ladebuchse ist mit zwei Energieleitungen ausgestattet, über welche die notwendige Ladeenergie übertragbar ist.

Die KR 100 774 654 B1 zeigt eine geschirmte Anbaubuchse. Bei dieser bedeckt eine Abschirmhülle einen mittigen Hochspannungsstromteil.

Die US 2016 006 156 A1 zeigt eine Fahrzeugladebuchse, die mit einem Ladestecker zum Laden einer Batterie verbindbar ist. Die Signalleitungen der Ladebuchse werden an die entsprechenden Kontaktelemente angeschlossen und in diesem Bereich, aus Wasserdichtigkeitsgründen, mit einem Schrumpfschlauch versehen.

Derartige Ladebuchsen müssen bei verschiedenen Umweltbedingungen einsatzfähig sein. Ein Laden des Elektrofahrzeugs im Freien muss genauso sicher sein wie das Laden in geschützten Umgebungen.

### Aufgabenstellung

Die Aufgabe der Erfindung besteht darin, eine zuverlässige Ladebuchse für ein Elektrofahrzeug bereitzustellen.

Die Aufgabe wird durch den Gegenstand der unabhängigen Ansprüche gelöst.

Vorteilhafte Ausgestaltungen der Erfindung sind in den Unteransprüchen und der folgenden Beschreibung angegeben.

Die erfindungsgemäße Ladebuchse ist für ein Elektrofahrzeug, insbesondere für einen PKW vorgesehen. Die Ladebuchse weist zumindest zwei elektrische Energieleitungen auf. Die Energieleitungen bestehen jeweils aus einer zentralen metallischen Leitung, über die hohe Ladeströme übertragen werden können. Die metallische Leitung weist in der Regel einen großen Querschnitt auf.

Die Ladebuchse weist ebenfalls zumindest zwei Signalleitungen zur Übertragung von Steuersignalen während des Ladevorgangs auf. Hierdurch kann der Ladevorgang an verschiedene Ladesituationen angepasst werden. Insbesondere wird hier zwischen einem Schnellladevorgang bei entsprechender hoher Energiezufuhr pro Zeiteinheit und einem Ladevorgang in einem normalen Hausnetz unterschieden.

Die Ladebuchse weist ein Gehäuse und einen damit verbundenen Kontaktträger auf. Das Gehäuse ragt in der Regel ins Innere eines Elektrofahrzeugs und schützt so die Komponenten der Ladebuchse. Der Kontaktträger bildet den, am Elektrofahrzeug außen sichtbaren, Steckbereich für einen Ladesteckverbinder aus.

Vorzugsweise ist zwischen dem Gehäuse und dem Kontaktträger eine Dichtung angeordnet. Hierdurch wird die Mediendichtigkeit der Ladebuchse verbessert.

Die Signalleitungen sind in zwei voneinander beabstandeten und parallel zueinander ausgerichteten Kabelmanagern angeordnet. Die Kabelmanager weisen jeweils durchgehende Öffnungen auf, in denen die Signalleitungen jeweils eingeführt sind. Die Signalleitungen sind zwischen den Kabelmanagern mit einer Umspritzung versehen. Hierdurch wird insbesondere eine besonders genaue und verdrehsichere Positionierung der Signalleitungen in der Ladebuchse gewährleistet. Außerdem wird hierdurch die Zugfestigkeit der Signalleitungen erhöht.

Vorzugsweise ist auf der Umspritzung ein Dichtring angeordnet. Hierdurch wird eine besonders hohe Mediendichtigkeit der Ladebuchse im Bereich der Signalleitungseinführung erreicht.

Vorzugsweise ist im Steckbereich des Kontaktträgers eine Öffnung mit einem angeformten Auslassstutzen zum Wasserablauf vorgesehen. Hierdurch kann beispielsweise Regenwasser ablaufen, welche während eines Ladevorgangs im Freien in die Ladebuchse eindringt. Gleichzeitig wird die Ladebuchse hierdurch winterfester. Eis, welches sich bei entsprechenden Außentemperaturen beispielsweise durch Schwitzwasser in der Ladebuchse bildet, kann sich durch den Wasserablauf ausdehnen, ohne Schaden anzurichten.

Die Ladebuchse weist Leistungskontaktelemente auf, die jeweils an einer Energieleitung angeschlossen sind. Vorteilhafterweise verfügt die Ladebuchse über zumindest einen Temperatursensor, der in der Nähe eines Leistungskontaktelements angeordnet ist. Die Daten des Temperatursensors können zur Steuerung des Ladevorgangs genutzt werden.

An den Signalleitungen der Ladebuchse sind Signalkontaktelemente angeschlossen. In einer vorteilhaften Ausführungsform der Erfindung sind die Leistungskontaktelemente und die Signalkontaktelemente über Rastmittel im Kontaktträger fixiert. Dadurch wird eine einfache Konfektionierung der Ladebuchse ermöglicht.

Auf der zentralen metallischen Leitung ist eine umlaufende erste Isolierung aufgebracht, die aus einem nichtleitenden Kunststoff (Kunststoffmantel) gebildet ist. Auf der ersten Isolierung ist ein metallisches Schirmgeflecht angeordnet. Das Schirmgeflecht dient zur elektromagnetischen Abschirmung der jeweiligen Energieleitung. Auf dem Schirmgeflecht ist eine umlaufende zweite Isolierung vorgesehen.

Die Ladebuchse weist eine metallische Kontaktbrille auf, die mit den (beiden) Schirmgeflechten der zumindest zwei Energieleitungen elektrisch leitend verbunden ist. Die Kontaktbrille weist zwei kreisrunde Anschlussbereiche auf, in denen die Energieleitungen verlaufen. Die Anschlussbereiche sind über einen spitz verlaufenden Steg verbunden.

Die Ladebuchse weist einen Anschraubdom auf, der mit der Kontaktbrille elektrisch leitend verbunden ist. Diese Verbindung findet an dem oben beschriebenen Steg statt. An dem Anschraubdom ist ein elektrischer Schirmleiter anschließbar, welcher zur Schirmanbindung an die Karosserie des Elektrofahrzeugs elektrisch leitend anschließbar ist.

Vorzugsweise ist auf dem jeweiligen Schirmgeflecht der elektrischen Energieleitungen eine metallische Hülse elektrisch leitend befestigt ist. Hierzu wird in der Regel die Crimptechnik verwendet. Diese Verbindungstechnik ist einfach realisierbar und gleichzeitig zuverlässig.

Bevorzugterweise weist die Hülse eine umlaufende Nut auf, wobei in der umlaufenden Nut eine metallische Ringfeder angeordnet ist. Die elektrische Verbindung zwischen der Kontaktbrille und dem jeweiligen Schirmgeflecht der elektrischen Energieleitungen wird über die metallische Hülse und der darin angeordneten Ringfeder realisiert. Diese elektrische Kontaktierung hat sich als besonders zuverlässig erwiesen, weil hierdurch Toleranzen und mechanische Bewegungen der Kontaktelemente beim Steckvorgang ausgeglichen werden können.

In einer bevorzugten Ausführungsform weist der Anschraubdom der Ladebuchse einen Ringkabelschuh zum Anschließen des Schirmleiters auf. Hierüber kann der Schirmleiter einfach und zuverlässig elektrisch leitend angeschlossen werden.

Vorteilhafterweise weist die Ladebuchse ein Gehäuse auf, welches die Kontaktbrille umfasst. Das Gehäuse besteht in der Regel aus Kunststoff. Die Kontaktbrille ist innerhalb des Gehäuses angeordnet. Durch das Gehäuse wird die Ladebuchse im eingebauten Zustand vor mechanischer Beschädigung und gegen ein Eindringen von Medien wie Wasser und Staub geschützt.

Bevorzugt wird das Gehäuse zweiteilig ausgeführt. Hierdurch wird die Konfektionierung der Ladebuchse erleichtert.

In einer bevorzugten Ausgestaltung der Erfindung ragt der Ringkabelschuh des Anschraubdoms aus dem Gehäuse heraus. Hierdurch kann der Schirmleiter auch noch nach der Konfektionierung der Ladebuchse angeschlossen werden.

### Ausführungsbeispiel

Ein Ausführungsbeispiel der Erfindung ist in den Zeichnungen dargestellt und wird im Folgenden näher erläutert. Es zeigen:
- Fig. 1: eine perspektivische Darstellung zweier Energieleitungen,
- Fig. 2: eine perspektivische Darstellung der Energieleitungen, die über eine Kontaktbrille miteinander verbunden sind,

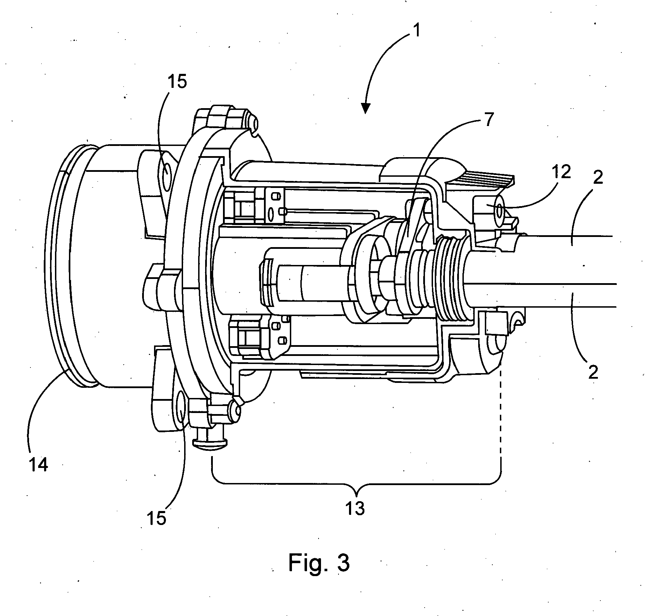

- Fig. 3: eine teilweise offene perspektivische Darstellung einer erfindungsgemäßen Ladebuchse,
- Fig. 4: eine geschlossene perspektivische Darstellung einer erfindungsgemäßen Ladebuchse,
- Fig. 5: eine perspektivische Darstellung von gebündelten Signalleitungen, die an die Ladebuchse angeschlossen sind,
- Fig. 6: eine weitere perspektivische Darstellung der gebündelten Signalleitungen, die an die Ladebuchse angeschlossen sind,
- Fig. 7: eine offene, perspektivische Darstellung der erfindungsgemäßen Ladebuchse und
- Fig. 8: eine perspektivische Darstellung der erfindungsgemäßen Ladebuchse.

Die Figuren enthalten teilweise vereinfachte, schematische Darstellungen. Zum Teil werden für gleiche, aber gegebenenfalls nicht identische Elemente identische Bezugszeichen verwendet. Verschiedene Ansichten gleicher Elemente könnten unterschiedlich skaliert sein.

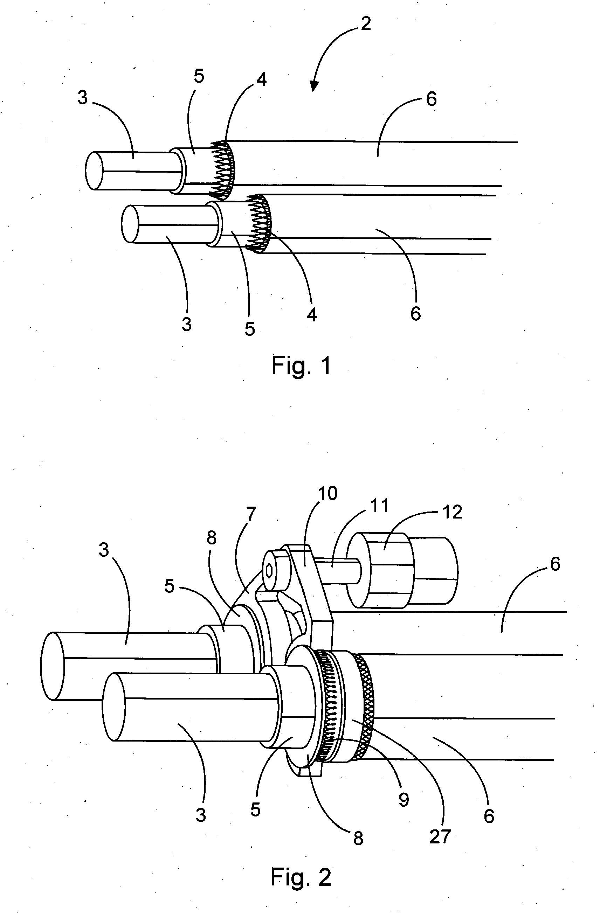

Die Figur 1 zeigt zwei elektrische Energieleitungen 2, die an die Ladebuchse 1 angeschlossen werden. Die jeweilige Energieleitung 2 besteht aus einer zentralen metallischen Leitung 3, die zur Übertragung hoher Ströme ausgelegt ist. Darüber ist eine umlaufende erste Isolierung 5 angeordnet. Auf der ersten Isolierung 5 befindet sich ein metallisches Schirmgeflecht 4. Um das Schirmgeflecht 4 herum ist eine zweite Isolierung 6 angeordnet.

Bei der Konfektionierung der Ladebuchse 1 werden die Energieleitungen 2 abisoliert bzw. vorbereitet, wie es in Figur 1 dargestellt ist. Im vorderen Teil sind die blanken metallischen Leitungen 3 zu sehen. Weiter hinten ist ein Teil der ersten Isolierung 5 zu sehen. Daran anschließend kommt das Schirmgeflecht 4 zum Vorschein, welches noch weiter hinten von der zweiten Isolierung 6 überdeckt ist.

Auf den jeweiligen Schirmgeflechten ist eine Hülse 8 mithilfe der Crimptechnik befestigt. Im hinteren Teil der Hülse 8 wird aus Stabilitätsgründen eine weitere Hülse 27 gecrimpt. Die Hülse 8 weist eine umlaufende Nut auf, in welcher eine Ringfeder 9 angeordnet ist. Auf die jeweilige Ringfeder 9 greift die jeweilige kreisrunde Ausnehmung der Kontaktbrille 7, wie in Figur.2 zu erkennen ist. Die Schirmgeflechte 4 der Energieleitungen 2 sind über die Kontaktbrille 7 elektrisch leitend kontaktiert. Über die Kontaktbrille 7 sind dann jeweils auch die Schirmgeflechte 4 elektrisch leitend miteinander kontaktiert.

Die Kontaktbrille 7 weist zwei kreisrunde Öffnungen auf, die die jeweiligen Energieleitungen 2 umfassen. Die kreisrunden Öffnungen sind über einen dreieckigen Steg 10 miteinander verbunden. Der Steg 10 weist eine Öffnung auf, in welcher ein Anschraubdom 11 angeordnet ist.

Der Anschraubdom 11 weist einen Ringkabelschuh 12 auf, über welchen ein elektrischer Schirmleiter (nicht gezeigt) anschließbar ist. Der Schirmleiter kann an die Karosserie des Elektrofahrzeugs angeschlossen und damit elektrisch leitend verbunden werden.

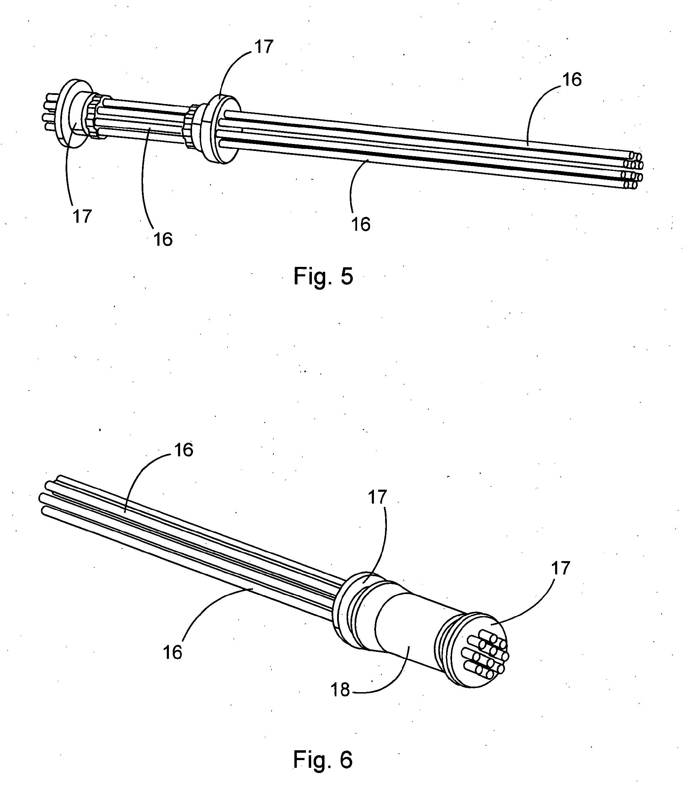

In den Figuren 5 und 6 sind die Signalleitungen 16 der Ladebuchse 1 dargestellt, die in zwei voneinander beabstandeten und parallel zueinander ausgerichteten Kabelmanagern 17 angeordnet sind. Die Kabelmanager 17 weisen jeweils mehrere Durchführungsöffnungen auf, durch welche jeweils eine Signalleitung 16 verläuft. Die Signalleitungen 16 sind zwischen den Kabelmanagern 17 mit einer Umspritzung 18 versehen. Hierdurch können die Signalleitungen 16 bei der Konfektionierung der Ladebuchse 1 sehr einfach gehandhabt werden.

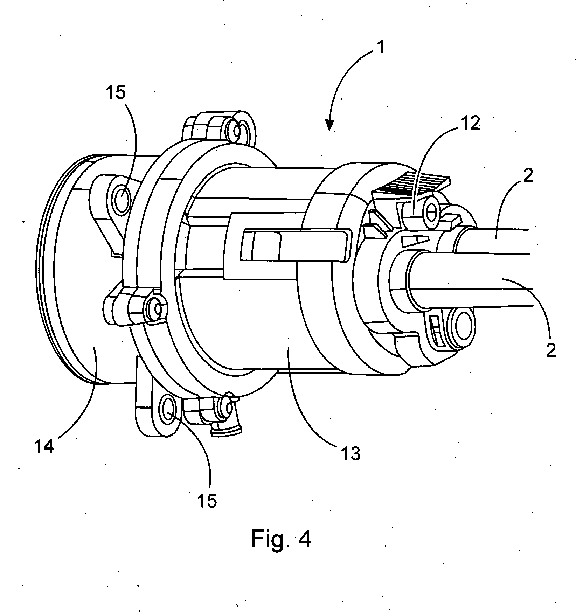

Das Gehäuse 13 der Ladebuchse 1 ist zweiteilig ausgeführt. Die beiden Gehäuseteile werden über einen Rastmechanismus verbunden, der in Figur 4 gut zu sehen ist. Im eingebauten Zustand ragt aus dem Elektrofahrzeug lediglich der Kontaktträger 14 der Ladebuchse 1 heraus. Anschlussseitig ragt der Kontaktträger 14 in das zweiteilige Gehäuse 13 der Ladebuchse 1 hinein. Der Kontaktträger 14 ist mit dem Gehäuse 13 verschraubt. Der Kontaktträger 14 weist Öffnungen 15 auf, über welche die Ladebuchse 1 an einem Elektrofahrzeug befestigt, beispielsweise verschraubt oder vernietet, werden kann.

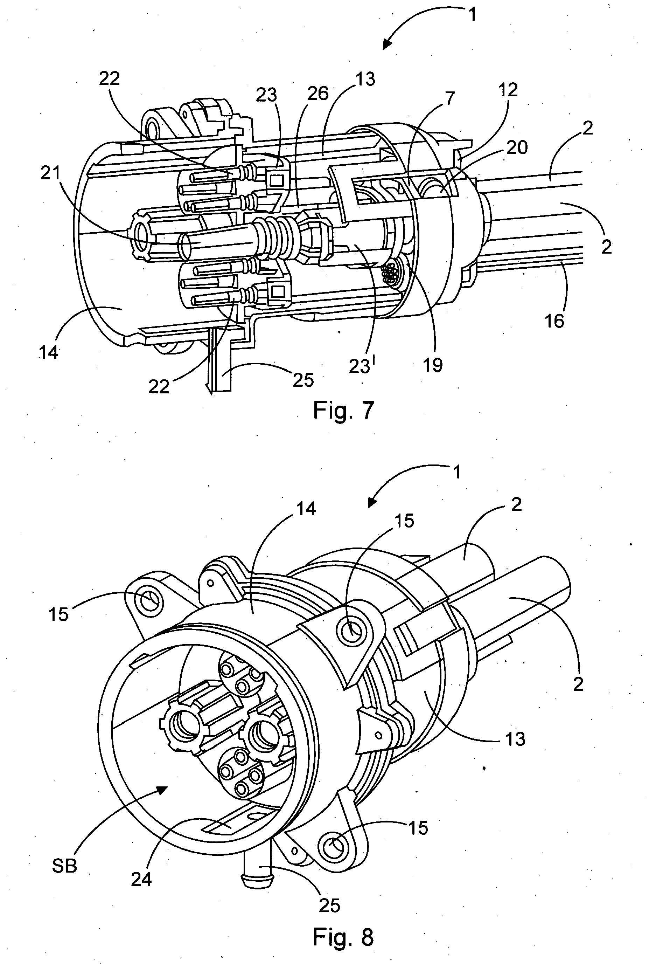

In Figur 7 ist eine offene Darstellung der Ladebuchse 1 zu sehen. Die über die Kabelmanager 17 und die Umspritzung 18 gebündelten Signalleitungen 16 sind im Bereich der Umspritzung 18 mit einer Dichtung 19 versehen. Auch die Energieleitungen 2 weisen jeweils eine Dichtung 20 auf. An die Signalleitungen 16 sind jeweils Signalkontaktelemente 22 angeschlossen. Aus darstellerischen Gründen verlaufend die Signalleitungen 16 jedoch nicht ganz zu den Signalkontaktelementen 22. An die Energieleitungen 2 sind jeweils Leistungskontaktelemente 21 angeschlossen. Die Kontaktelemente 21, 22 werden über Rastmittel 23, 23' im Kontaktträger 14 fixiert.

In der Nähe eines Leistungskontaktelements 21 ist ein Temperatursensor 26 angeordnet. Hierüber können Daten über den Ladevorgang gesammelt werden, welcher dann entsprechend über eine Steuereinheit in der Ladestation geregelt werden kann.

In Figur 8 ist die erfindungsgemäße Ladebuchse 1 steckseitig perspektivisch dargestellt. Im Steckbereich SB, den der Kontaktträger 14 ausbildet, ist an der Innenwand eine Vertiefung 24 mit einer Öffnung vorgesehen. Im Bereich der Öffnung ist außenseitig ein Wasserablauf 24 angeformt, der im Wesentlichen eine zylindrische Form mit einem trichterartigen Auslass aufweist. Hierüber wird das Wasser abgeführt, welches beispielsweise durch Regen beim Außenladen in die Ladebuchse 1 gerät.

### Bezugszeichenliste

- 1: Ladebuchse
- 2: Energieleitung
- 3: Metallische Leitung
- 4: Schirmgeflecht
- 5: Erste Isolierung
- 6: Zweite Isolierung
- 7: Kontaktbrille
- 8: Hülse
- 9: Ringfeder
- 10: Steg
- 11: Anschraubdorn
- 12: Ringkabelschuh
- 13: Gehäuse
- 14: Kontaktträger
- 15: Öffnung
- 16: Signalleitung
- 17: Kabelmanager
- 18: Umspritzung
- 19: Dichtung
- 20: Dichtung
- 21: Leistungskontaktelement
- 22: Signalkontaktelement
- 23: Rastmittel
- 24: Vertiefung
- 25: Wasserablauf
- 26: Temperatursensor
- 27: Hülse
- SB: Steckbereich

## Patentansprüche

1. Ladebuchse (1) für ein Elektrofahrzeug aufweisend
zumindest zwei elektrische Energieleitungen (2) zur Übertragung eines Ladestroms,
zumindest zwei Signalleitungen (16) zur Übertragung von Steuersignalen beim Ladevorgang,
einem Gehäuse (13) und einen damit verbundenem Kontaktträger (14), der den Steckbereich für einen Ladesteckverbinder ausbildet
**dadurch gekennzeichnet, dass**
die zumindest zwei Signalleitungen (16) mit einer Umspritzung (18) versehen und dadurch gebündelt sind.

2. Ladebuchse (1) nach Anspruch 1
**dadurch gekennzeichnet, dass**
die Signalleitungen (16) in zwei voneinander beabstandeten und parallel zueinander ausgerichteten Kabelmanagern (17) angeordnet sind und
dass die Signalleitungen (16) zwischen den Kabelmanagern mit der Umspritzung (18) versehen sind.

3. Ladebuchse (1) nach einem der vorstehenden Ansprüche
**dadurch gekennzeichnet, dass**
im Steckbereich (SB) des Kontaktträgers (14) ein Wasserablauf (25) angeordnet ist.

4. Ladebuchse (1) nach einem der vorstehenden Ansprüche
**dadurch gekennzeichnet, dass**
auf der Umspritzung (18) eine Dichtung (19) angeordnet ist.

5. Ladebuchse (1) nach einem der vorstehenden Ansprüche
**dadurch gekennzeichnet, dass**
die Ladebuchse (1) Leistungskontaktelemente (21) aufweist, die jeweils an einer Energieleitung (2) angeschlossen sind und dass die Ladebuchse (1) zumindest einen Temperatursensor (26) aufweist, der in der Nähe eines Leistungskontaktelements (21) angeordnet ist.

6. Ladebuchse (1) nach einem der vorstehenden Ansprüche
**dadurch gekennzeichnet, dass**
die Ladebuchse (1) Signalkontaktelemente (22) aufweist, die jeweils an einer Signalleitung (16) angeschlossen sind.

7. Ladebuchse (1) nach einem der vorstehenden Ansprüche
**dadurch gekennzeichnet, dass**
zwischen dem Gehäuse (13) und dem Kontaktträger (14) eine Dichtung angeordnet ist.

8. Ladebuchse (1) nach den beiden vorstehenden Ansprüchen
**dadurch gekennzeichnet, dass**
die Leistungskontaktelemente (21) und die Signalkontaktelemente (22) über Rastmittel (23, 23') im Kontaktträger (14) fixiert sind.

9. Ladebuchse (1) nach einem der vorstehenden Ansprüche
**dadurch gekennzeichnet, dass**
die Energieleitungen (2) jeweils ein Schirmgeflecht (4) aufweisen, dass die Ladebuchse (1) eine metallische Kontaktbrille (7) aufweist, die mit den Schirmgeflechten (4) der zumindest zwei Energieleitungen (2) elektrisch leitend verbunden ist, dass die Ladebuchse (1) einen Anschraubdom (11) aufweist, der mit der Kontaktbrille (7) elektrisch leitend verbunden ist und an welchem ein elektrischer Schirmleiter anschließbar ist.

10. Ladebuchse (1) nach vorstehendem Anspruch
**dadurch gekennzeichnet, dass**
auf das jeweilige Schirmgeflecht (4) der elektrischen Energieleitungen (2) eine metallische Hülse (8) elektrisch leitend befestigt ist.

11. Ladebuchse nach vorstehendem Anspruch
**dadurch gekennzeichnet, dass**
die Hülse (8) eine umlaufende Nut aufweist.

12. Ladebuchse nach vorstehendem Anspruch
**dadurch gekennzeichnet, dass**
in der umlaufenden Nut eine metallische Ringfeder (9) angeordnet ist.

13. Ladebuchse nach Anspruch 9
**dadurch gekennzeichnet, dass**
die Hülse (8) auf das Schirmgeflecht der Energieleitung (2) gecrimpt ist.

14. Ladebuchse nach einem der vorstehenden Ansprüche
**dadurch gekennzeichnet, dass**
der Anschraubdom (11) einen Ringkabelschuh (12) zum Anschließen des Schirmleiters aufweist.

15. Ladebuchse nach einem der vorstehenden Ansprüche
**dadurch gekennzeichnet, dass**
die Ladebuchse (1) ein zweiteiliges Gehäuse (13) aufweist.

16. Ladebuchse nach Anspruch 14
**dadurch gekennzeichnet, dass**
der Ringkabelschuh (12) des Anschraubdoms (11) aus dem Gehäuse (13) herausragt.

## Claims

1. Charging socket (1) for , an electric vehicle, comprising
at least two electrical energy lines (2) for the transmission of a charging current,
at least two signal lines (16) for the transmission of control signals during the charging operation,
a housing (13) and a contact carrier (14), which is connected to said housing and forms the plug-in region for a charging plug-in connector,
**characterized in that** the at least two signal lines (16) are provided with an overmoulding (18) and are thereby bundled.

2. Charging socket (1) according to Claim 1,
**characterized in that**
the signal lines (16) are arranged in two cable managers (17), which are spaced apart from each other and aligned parallel to each other, and
**in that**, between the cable managers, the signal lines (16) are provided with an overmoulding (18).

3. Charging socket (1) according to one of the preceding claims,
**characterized in that**
a water drain (25) is arranged in the plug-in region (SB) of the contact carrier (14).

4. Charging socket (1) according to one of the preceding claims,
**characterized in that**
a seal (19) is arranged on the overmoulding (18).

5. Charging socket (1) according to one of the preceding claims,
**characterized in that**
the charging socket (1) has power contact elements (21), which are each connected to an energy line (2), and
**in that** the charging socket (1) has at least one temperature sensor (26), which is arranged in the vicinity of a power contact element (21).

6. Charging socket (1) according to one of the preceding claims,
**characterized in that**
the charging socket (1) has signal contact elements (22), which are each connected to a signal line (16).

7. Charging socket (1) according to one of the preceding claims,
**characterized in that**
a seal is arranged between the housing (13) and the contact carrier (14).

8. Charging socket (1) according to the two preceding claims,
**characterized in that**
the power contact elements (21) and the signal contact elements (22) are fixed in the contact carrier (14) by way of latching means (23, 23').

9. Charging socket (1) according to one of the preceding claims,
**characterized in that**
the energy lines (2) each have a shielding braid (4), **in that** the charging socket (1) has a metal contact gland (7), which is connected in an electrically conducting manner to the shielding braids (4) of the at least two energy lines (2), **in that** the charging socket (1) has a screw-on dome (11), which is connected in an electrically conducting manner to the contact gland (7) and to which an electrical shielding conductor can be connected.

10. Charging socket (1) according to the preceding claim,
**characterized in that**
a metal sleeve (8) is fastened in an electrically conducting manner on the respective shielding braid (4) of the electrical energy lines (2).

11. Charging socket according to the preceding claim,
**characterized in that**
the sleeve (8) has a peripheral groove.

12. Charging socket according to the preceding claim,
**characterized in that**
a metal circlip (9) is arranged in the peripheral groove.

13. Charging socket according to Claim 9,
**characterized in that**
the sleeve (8) is crimped on the shielding braid of the energy line (2).

14. Charging socket according to the preceding claim,
**characterized in that**
the screw-on dome (11) has a ring-cable lug (12) for connecting the shielding conductor.

15. Charging socket according to one of the preceding claims,
**characterized in that**
the charging socket (1) has a two-part housing (13).

16. Charging socket according to Claim 14,
**characterized in that**
the ring-cable lug (12) of the screw-on dome (11) protrudes out of the housing (13).

## Revendications

1. Prise de recharge (1) pour un véhicule électrique, comprenant
au moins deux lignes,d'énergie (2) électriques destinées à transmettre un courant de recharge,
au moins deux lignes de signal (16) destinées à transmettre des signaux de commande lors de l'opération de recharge,
un boîtier (13) et un porte-contacts (14) relié à celui-ci, lequel forme la zone d'enfichage pour un connecteur à enficher de recharge
**caractérisée en ce que**
les au moins deux lignes de signal (16) sont pourvues d'un surmoulage (18) et sont ainsi groupées en faisceau.

2. Prise de recharge (1) selon la revendication .1,
**caractérisée en ce que**
les lignes de signal (16) sont disposées dans deux gestionnaires de câbles (17) espacés l'un de l'autre et orientés parallèlement l'un à l'autre et
**en ce que** les lignes de signal (16) sont pourvues du surmoulage (18) entre les gestionnaires de câbles.

3. Prise de recharge (1) selon l'une des revendications précédentes,
**caractérisée en ce que**
une évacuation d'eau (25) est disposée dans la zone d'enfichage (SB) du porte-contacts (14).

4. Prise de recharge (1) selon l'une des revendications précédentes,
**caractérisée en ce que**
une garniture d'étanchéité (19`) est disposée sur le surmoulage (18).

5. Prise de recharge (1) selon l'une des revendications précédentes,
**caractérisée en ce que**
la prise de recharge (1) possède des éléments de contact de puissance (21) qui sont respectivement raccordés à une ligne d'énergie (2) et
**en ce que** la prise de recharge (1) possède au moins un capteur de température (26) qui est disposé à proximité d'un élément de contact de puissance (21).

6. Prise de recharge (1) selon l'une des revendications précédentes,
**caractérisée en ce que**
la prise de recharge (1) possède des éléments de contact de signal (22) qui sont respectivement raccordés à une ligne de signal (16).

7. Prise de recharge (1) selon l'une des revendications précédentes,
**caractérisée en ce que**
une garniture d'étanchéité est disposée entre le boîtier (13) et le porte-contacts (14).

8. Prise de recharge (1) selon les deux revendications précédentes,
**caractérisée en ce que**
les éléments de contact de puissance (21) et les éléments de contact de signal (22) sont fixés dans le porte-contacts (14) par le biais de moyens d'encliquetage (23, 23').

9. Prise de recharge (1) selon l'une des revendications précédentes,
**caractérisée en ce que**
les lignes d'énergie (2) possèdent respectivement une tresse de blindage (4),
**en ce que** la prise de recharge (1) possède une paire de lunettes de contact (7) métallique, laquelle est reliée de manière électriquement conductrice aux tresses de blindage (4) des au moins deux lignes d'énergie (2), **en ce que** la prise de recharge (1) possède un dôme à visser (11), lequel est relié de manière électriquement conductrice à la paire de lunettes de contact (7) et auquel peut être raccordé un conducteur de blindage électrique.

10. Prise de recharge (1) selon la revendication précédente,
**caractérisée en ce que**
une douille (8) métallique est fixée de manière électriquement conductrice sur la tresse de blindage (4) respective des lignes d'énergie (2) électriques.

11. Prise de recharge selon la revendication précédente,
**caractérisée en ce que**
la douille (8) possède une rainure périphérique.

12. Prise de recharge selon la revendication précédente,
**caractérisée en ce que**
un ressort annulaire métallique (9) est disposé dans la rainure périphérique.

13. Prise de recharge selon la revendication 9
**caractérisée en ce que**
la douille (8) est sertie sur la tresse de blindage de la ligne d'énergie (2),

14. Prise de recharge selon l'une des revendications précédentes,
**caractérisée en ce que**
le dôme à visser (11) possède une cosse de câble à œillet (12) destinée au raccordement du conducteur de blindage.

15. Prise de recharge selon l'une des revendications précédentes,
**caractérisée en ce que**
la prise de recharge (1) possède un boîtier (13) en deux parties.

16. Prise de recharge selon la revendication 14,
**caractérisée en ce que**
la cosse de câble à œillet (12) du dôme à visser (11) fait saillie hors du boîtier (13).
